# EUROPEAN PATENT APPLICATION

(11) **EP 1 271 806 A1**
(43) Date of publication of application: **02.01.2003**
(21) Application number: 02251579.5
(22) Date of filing: 06.03.2002
(51) Int. Cl.: H04B 10/10

(54) **Method and apparatus for the correction of optical signal wave front distortion within a free-space optical communication system**

(30) Priority: 29.06.2001 US 896804
(71) Applicant: LUCENT TECHNOLOGIES INC., Murray Hill, New Jersey 07974-0636 (US)
(72) Inventor: Presby, Herman Melvin, Highland Park, New Jersey 08904 (US); Tyson, John Ahtony, Pottersville, New Jersey 07979 (US)
(74) Representative: Watts, Christopher Malcolm Kelway, Dr.

(57) **Abstract**

A free space optical communication system is disclosed whereby the optics of a transmit telescope are manipulated using adaptive optics to precompensate for wave front distortion of a light beam transmitted by a transmit telescope. Wave front distortion is manifested at the receive telescope as a change in at least one characteristic of the image of the received signal such as, for example, a reduction in the amplitude of the received signal. A mirror of the transmit telescope is deformed in such a way as to reduce the wave front distortion and correspondingly increase the resulting amplitude of the received signal.

## Description

### Field of the Invention

The present invention is related generally to data communication systems and, in particular, to free-space optical data communication systems.

### Background of the Invention

Telecommunication systems that connect two or more sites with physical wire or cable are generally limited to relatively low-speed, low-capacity applications. Laying the cable for such systems is also expensive and may be difficult, especially in congested metropolitan areas where installation options are limited. In order to address these limitations, recently developed systems utilize the free-space transmission of one or more light beams modulated with data to transmit the data from one point to another. Even in the case where a physical, hard-wired connection between two networks exists, a free-space system using such beams provides a higher-speed and higher-capacity link, presently up to 10 Gbps, between these networks. When two networks are not already physically linked via wire, free-space communication avoids the communication system infrastructure cost of laying cable to connect one site in the system to another. Instead of cables, free-space optical communications systems comprise, in part, at least one transmit telescope and at least one receive telescope for sending and receiving information, respectively, between two or more communications sites.

The operation of free-space optical communications may be hampered by a variety of factors, however. For example, distortion of the wave front of the transmitted light beam may occur due to any changes in the refractive properties of the transmitting medium including those due to temperature variations, turbulence or other phenomena. This distortion may result in a phenomenon known as "beam tilt" wherein different discrete sections of the wave front of the beam deviate from their transmitted, orthogonal orientation to the line of travel of the beam. At the receive telescope, the result of such beam tilt is the movement of the image of the received beam on the focal plane of the receive telescope. Beam intensity fluctuation, also known as scintillation, may also occur. Either of these phenomena may result in significant degradation or total loss of communications.

### Summary of the Invention:

The aforementioned problems related to wave front distortion are ameliorated by the present invention. In accordance with the present invention, the optics of the transmit telescope are manipulated using adaptive optics to precompensate for at least some of that distortion. The term "adaptive optics," as used herein, means an optical system in which at least one optical parameter is varied as a function of a control signal, such as a signal indicative of phenomena that distort the wave front of the transmitted signal. An example of optics suited for use in such a system, and used in the illustrative embodiment disclosed herein, is the deformable mirror described in the co-pending patent application titled "Telescope For A Free-Space Wireless Optical Communication System," having Serial No. 09/679159. Wave front distortion is manifested at the receive telescope as a change in at least one characteristic of the image of the received signal such as, for example, a reduction in the amplitude of the received signal. A mirror of the transmit telescope can then be deformed in such a way as to reduce the wave front distortion and correspondingly increase the resulting amplitude of the received signal.

### Brief Description of the Drawing

FIG. 1 shows an optical communication system using a prior art telescope apparatus during normal communications conditions;
FIG. 2 shows an optical communication system using a prior art telescope apparatus wherein atmospheric turbulence causes wave front distortion of a transmitted beam;
FIG. 3 shows a transmit telescope in the system of the present invention that is capable of being deformed using adaptive optics to precompensate for atmospheric turbulence;
FIG. 4 shows an optical communication system utilizing adaptive optics in accordance with the principles of the present invention to compensate for wave front distortion of the transmitted beam;

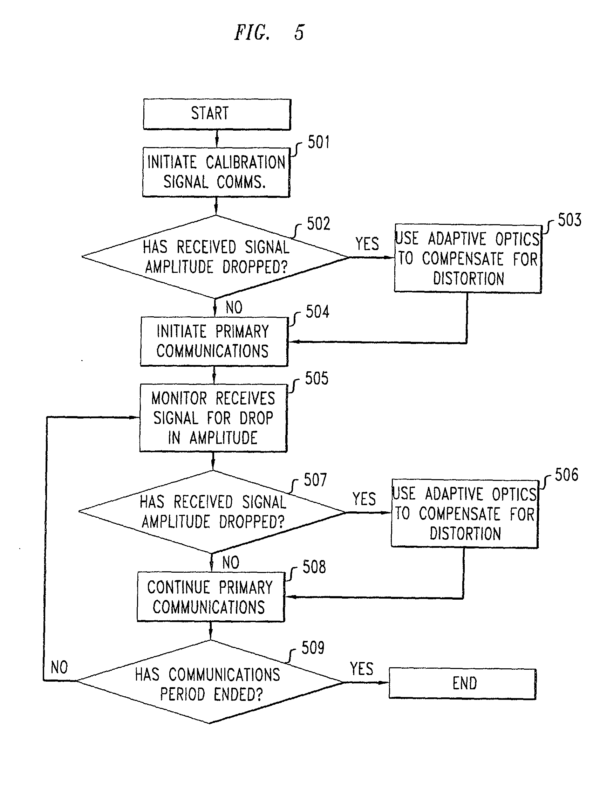

FIG. 5 shows a flow chart depicting illustrative steps of the operation of the system of FIG. 4.

### Detailed Description of the Invention

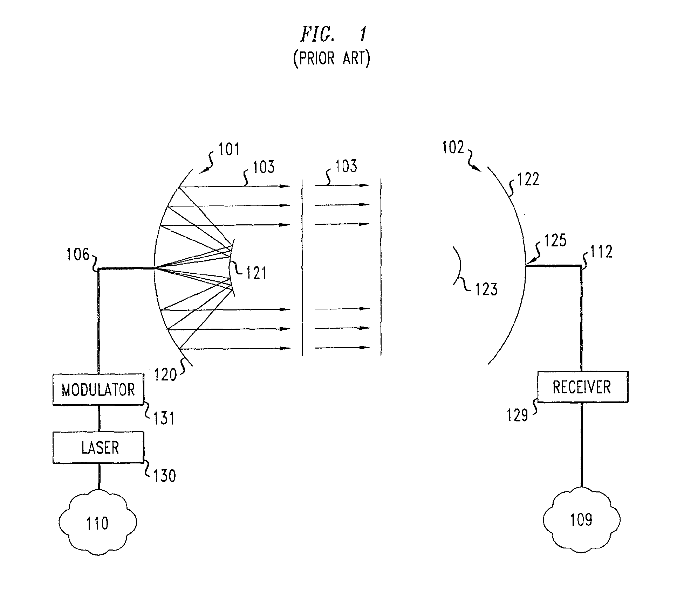

FIG. 1 shows two prior art optical communication telescopes, 101 and 102, during normal aligned operating conditions in a free-space optical communications system. Laser 130 produces a light beam that is modulated by modulator 131 with data received from network 110 and transmitted on optical fiber 106. The transmit telescope 101 receives the modulated optical signal via optical fiber 106. Primary mirror 120 and secondary mirror 121 of telescope 101 optically shape and transmit the modulated light beam such that the beam is incident upon the focal plane 125 of receive telescope 102. Receive telescope 102 utilizes its optics, including a primary mirror 122 and a secondary mirror 123, to focus the incident transmitted modulated light beam 103 onto the receive optical fiber 112 at the focal plane 125. Receiver 129 receives the modulated optical signal from the receive optical fiber and converts it to an electrical signal, demodulates the data, and forwards the data to network 109. It should be noted that receive telescope 102 may be made capable of transmitting a light beam by incorporating a laser and a modulator similar to laser 130 and modulator 131. Likewise, the transmit telescope 101 may be made capable of receiving by incorporating a receiver into the electronics of that telescope, similar to receiver 129. Thus, both telescopes of the system would be capable of transmitting and receiving. Such a dual-use capability of transmitting and receiving is intended to apply to all telescopes described in the embodiments of the present invention disclosed hereinafter.

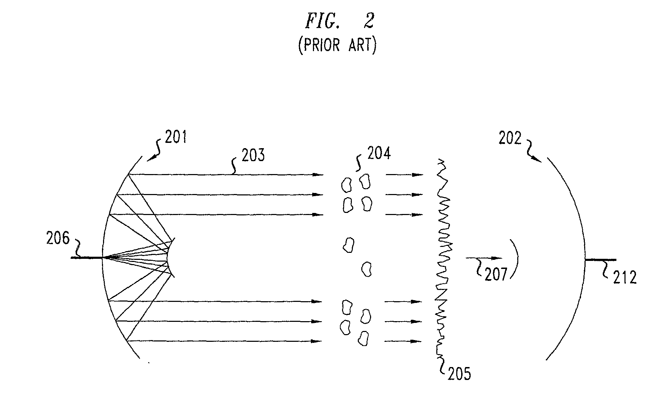

In certain situations, the wave front of the light beam transmitted by a transmitting telescope may be distorted when it arrives at the focal plane of the receive telescope, resulting in a correspondingly distorted communications signal. As shown in FIG. 2, such distortion may occur due to atmospheric turbulence, such as small-cell turbulence 204, near transmit telescope 201, that causes portions of the wave front of the transmitted beam 203 to refract and thus deviate from the direct path between the transmit and receive telescopes. When this occurs, discrete portions of wave front 205 become non-orthogonal to the line of travel 207 of the wave front. The result is that certain portions of the wave front will arrive at the receive telescope at different times than others, and may arrive at different angles relative to the line of travel of the beam 207. Some portions of the wave front may not be incident upon the receive telescope at all. Thus, the amplitude of the received signal will be reduced and the image on the focal plane of the receive telescope may also exhibit scintillation. This can significantly degrade communications between the two telescopes.

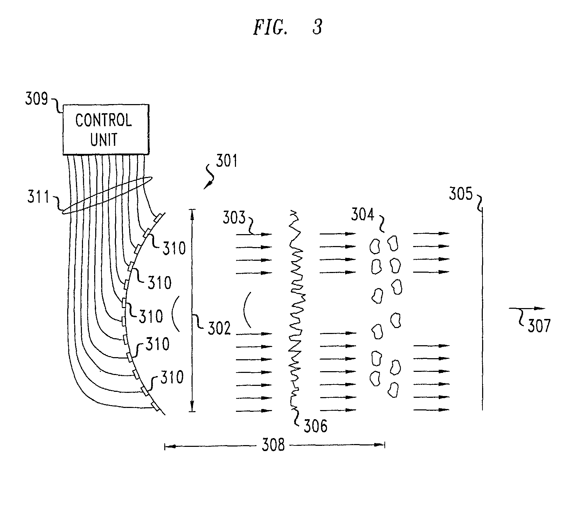

FIG. 3 shows one embodiment of the present invention that precompensates for the aforementioned degradation when it occurs substantially close to the transmit telescope such that aperture diameter 302 is much greater than the distance 308 to the turbulence, for example. In this case, the effects of turbulence near the transmit telescope on the beam's wave front are measured at the receive telescope and are then precompensated for at the transmit telescope. To do this, the reduced signal amplitude resulting from turbulence 304 is detected at the receive telescope and the primary mirror of the transmit telescope is deformed. To accomplish this deformation, control unit 309 of the transmit telescope 301 varies the individual voltages to electrodes 310 located at or near the surface of primary mirror 320 via leads 311. By applying a voltage difference between the mirror 320 and the electrodes 310, an electrostatic attractive or repelling force is produced between each electrode and a portion of the mirror near that electrode, causing the mirror to be deformed. The use of such deformable mirrors in free-space laser communications systems is the subject of the above-cited copending application. Varying the voltages on the electrodes 310 enables the extent of the deformation of mirror 320 to be controlled. The result is the transmission of beam 303 with a wave front 306 of which discrete sections are intentionally made to be non-orthogonal to the line of travel. Upon passing through the areas of turbulence 304, the intentionally deformed sections of wave front 306 then become orthogonal to the line of travel 307, as exemplified by plane wave front 305.

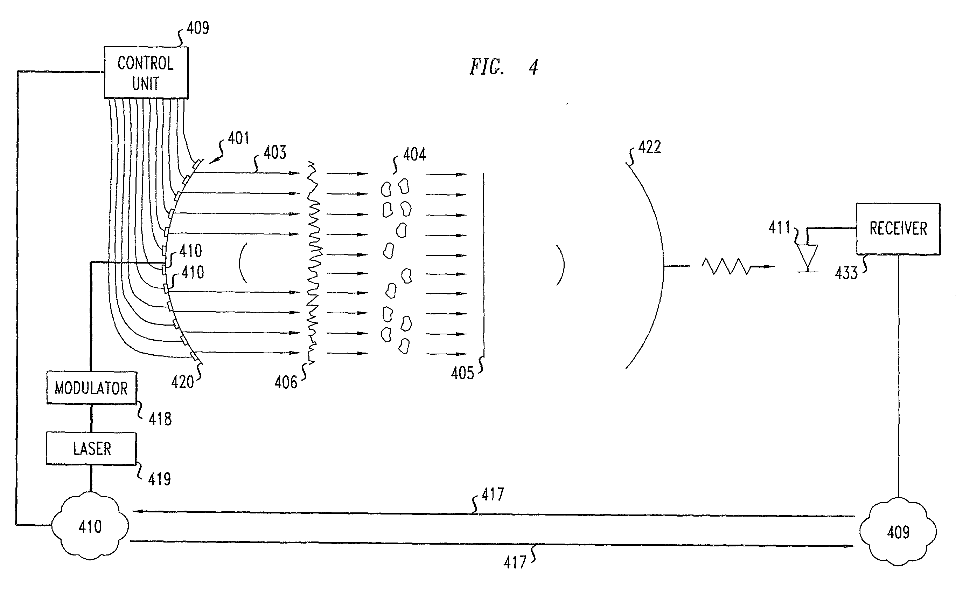

FIG. 4 shows a free-space telecommunications system incorporating the embodiment of the present invention of FIG. 3 that utilizes adaptive optics, as described above, to compensate for disturbances near the transmit telescope that cause the aforementioned distortion. In that system, laser 419 produces a light beam that is modulated by modulator 418 with data from network 410. This modulated light beam is then transmitted to telescope 401 which shapes the beam 403 so that it is incident on the focal plane of receive telescope 402. Photodetector 411 detects the incoming light energy, converts it to an electrical signal, and forwards it to receiver 433, which demodulates the signal. The demodulated data is then forwarded to the intended destination within network 409.

However, if distortion is present near the transmit telescope, the amplitude of the received signal may be reduced and the image of that signal on the receive focal plane may be scintillated. To precompensate for this distortion, the primary mirror of the transmit telescope 401 is deformed. When the shape of the mirror is deformed appropriately, a distorted wave front 406 will be transmitted by the transmit telescope, which intentionally introduces beam-tilt into discrete portions of the wave front of the transmitted beam 403. The refraction that results from atmospheric turbulence 404 will then return the wave front to an orthogonal, or nearly orthogonal wave front 405 after passing through that distortion.

In order to achieve the aforementioned deformation, control unit 409 receives an indication of reduced received signal amplitude via network connection 417 and deforms the primary mirror of the transmit telescope 420 either randomly or in a predetermined pattern. To do this, control unit 409 applies a voltage to individual electrodes 410 located near the surface of the mirror 401 where deformation is desired. Deformation of the mirror 401 is varied by varying the voltages applied to the electrodes 410. Received signal amplitude is monitored as this deformation occurs to determine whether it was successful in precompensating for the turbulence. In order to precompensate, on an ongoing basis, for distortion of the transmitted signal 403, the amplitude of the received signal is continuously or periodically monitored at the receive telescope 422 for any reduction in amplitude that may be the result of a change in the turbulence condition 404.

Illustrative steps of the operation of the system of FIG. 4 are shown in FIG 7. An initial calibration signal 403 is generated at step 501. If received signal amplitude drops, as determined at step 502, then the system determines which discrete locations of the primary mirror of the transmit telescope need to be deformed, as well as the magnitude and direction of deformation required at each discrete location on that mirror. At step 503, the primary mirror of the transmit telescope is deformed. Once the system has precompensated for the distortion, primary communications begin at step 504. While communications are ongoing, the system continually monitors the amplitude of the received signal, at step 505, for any change that may necessitate changes to the deformation of the primary mirror. At step 507, if an additional reduction in signal amplitude is detected, the invention once again, at step 506, deforms the primary mirror of the transmit telescope to attempt to compensate for the distortion.. Then, if the system has successfully precompensated for the distortion via the use of adaptive optics, as would be evident by an increased signal amplitude, primary communications continue at step 508. If the primary communications period has not ended at step 509, then the system continues to monitor the received signal amplitude, at step 505, for any drop in amplitude which may arise and then attempt to compensate for that distortion as necessary via changing the location and amount of the distortion of the primary mirror of the transmit telescope.

The foregoing merely illustrates the principles of the invention. It will thus be appreciated that those skilled in the art will be able to devise various arrangements that, although not explicitly described or shown herein, embody the principles of the invention and are within its scope. Furthermore, all examples and conditional language recited herein are intended expressly to be only for pedagogical purposes to aid the reader in understanding the principles of the invention and are to be construed as being without limitation to such specifically recited examples and conditions. Moreover, all statements herein reciting aspects and embodiments of the invention, as well as specific examples thereof, are intended to encompass functional equivalents thereof.

Diagrams herein represent conceptual views of optical telescopes and light beams modulated with data for the purposes of free-space optical communications. Diagrams of optical components are not necessarily shown to scale but are, instead, merely representative of possible physical arrangements of such components. Optical fibers depicted in the diagrams represent only mechanism for transmitting data between telescopes and network destinations. Any other communication method for passing data from the telescopes to network destinations is intended as an alternative to the method shown in the diagram.

Additionally, although the disclosed embodiment addresses precompensating for the wave front distortion resulting from atmospheric turbulence, there are numerous other causes of such distortion that may potentially be precompesated for by the present invention. For example, if the light beam passes through any material located near the transmit telescope, such as window glass, significant wave front distortion could result. The method and apparatus of the present invention will at least partially correct for any resulting wave front distortion.

Other aspects of the disclosed embodiments of the present invention are also merely illustrative in nature. For instance, although the embodiment presented utilizes traditional network connections to deliver information to and from the telescopes, wireless methods of communication could alternatively be used. In this case, the communications system could use a different wavelength for the feedback signal to avoid interfering with the primary communications signal. Also, the disclosed embodiment of the present invention electrostatically deforms the primary mirror of the transmit telescope by varying the voltages applied to electrodes near the surface of that mirror. However, any other mirror of the receive telescope may be deformed with identical results. Deforming any mirror in the communications system to achieve the same result as in the embodiments of the present invention will be apparent to one skilled in the art. Also, there are many well-known alternatives to the use of electrostatic effects as used herein for deforming discrete sections of the mirrors, such as piezeo-electric drivers or mechanical screws. Any method of deforming any mirror in the communications system is intended to be encompassed by this invention.

Finally, any method of using adaptive optics at the transmit telescope to precompensate for distortion to the wave front is intended to be encompassed by the present invention. For example, lenses may be used as the functional equivalents to mirrors. Additionally, any use of segmented mirrors to deform the wave front of the communications light beam is the functional equivalent of deforming a single mirror in multiple, discrete locations. Instead of using a single, continuous primary or secondary mirror to deform the wave front of the communications signal, segmented mirrors comprise many small mirrors which are independently movable to achieve the same effect. Any such method, or its functional equivalent, is expressly intended to be encompassed by the present invention disclosed herein.

## Claims

1. A transmit telescope for transmitting a communications signal, said transmit telescope comprising:
means for transmitting a light beam to a receive telescope; and
means for adjusting said transmitting means in such a way as to compensate for the effects of wave front distortion of said beam occurring after said beam is transmitted by said transmit telescope.

2. The transmit telescope of claim 1 wherein said means for adjusting adjusts said transmitting means as a function of a signal indicative of said wave front distortion.

3. The transmit telescope of claim 2 wherein said signal is indicative of a drop in amplitude of the communications signal at the receive telescope.

4. The transmit telescope of claim 2 wherein said means for adjusting deforms at least one surface of the optics to alter the shape of the wave front of the transmitted beam.

5. Apparatus for reducing wave front distortion of an optical signal in a free-space optical communications system that comprises at least one transmit telescope and at least one receive telescope, the apparatus comprising:
means for transmitting the optical signal from the transmit telescope to the receive telescope; and
means for distorting the wave front of said signal in such a way that, upon passing through atmospheric volumes **characterized by** varying refractive index, said wave front becomes less distorted than it would otherwise be.

6. The apparatus of claim 5 wherein said means for distorting distorts said wave front as a function of a signal indicative of said wave front distortion.

7. The apparatus of claim 5 wherein said means for transmitting comprises a plurality of mirrors used to shape the optical signal.

8. The apparatus of claim 6 wherein said transmit telescope further comprises means for receiving said signal indicative of said wave front distortion.

9. The apparatus of claim 6 wherein said signal indicative of said wave front distortion is generated in response to a detection of a drop in the amplitude of the optical signal at the receive telescope.

10. A method for use in a free-space optical communication system, the method comprising:
transmitting a light beam from a transmit telescope:
receiving an indication of wave front distortion in said beam; and
deforming the optics of said transmit telescope to produce a wave front that, upon passing through atmospheric turbulence, becomes more orthogonal to the line of travel of said beam than it otherwise would be.
